# EUROPEAN PATENT APPLICATION

(11) **EP 4 546 108 A1**
(43) Date of publication of application: **30.04.2025**
(21) Application number: 24209000.9
(22) Date of filing: 25.10.2024
(51) Int. Cl.: G06F 3/12

(54) **INFORMATION PROCESSING APPARATUS, CONTROL METHOD FOR INFORMATION PROCESSING APPARATUS, AND COMPUTER PROGRAM**

(30) Priority: 25.10.2023 JP 2023183181
(71) Applicant: CANON KABUSHIKI KAISHA, Tokyo 146-8501 (JP)
(72) Inventor: SAITO, Kazuyuki, Tokyo, 146-8501 (JP)
(74) Representative: Canon Europe Limited

(57) **Abstract**

A non-transitory computer-readable storage medium storing an application program which causes an information processing apparatus to perform a control method including acquiring capability information from a printer, determining whether to allow image rotation through a function provided by an operating system of the information processing apparatus based on the capability information acquired from the printer, and providing information based on the determination to the operating system.

## Description

### TECHNICAL FIELD

The present invention relates to a control method for an information processing apparatus, an information processing apparatus, and a computer program.

### BACKGROUND OF THE INVENTION

### Description of the Related Art

In recent years, a generic printer driver that directly communicates with image forming apparatuses using industry-standard protocols, such as the Internet Printing Protocol (IPP), has been discussed. The generic printer driver is a driver provided by an operating system (OS) vendor providing an OS of a client terminal and is a printer driver configured to generate print data that can be interpreted by printers of a plurality of printer vendors. The generic printer driver is capable of communicating with the printers of the plurality of printer vendors. Thus, use of the generic printer driver enables users to transmit print jobs to image forming apparatuses without installing vendor-specific printer drivers.

Furthermore, printing using a cloud printing service has been discussed. In the cloud printing service, a printer driver for the cloud printing service is installed in an information processing apparatus. The cloud printer driver is also a generic printer driver provided by the OS vendor providing the OS of the client terminal and is a printer driver configured to generate print data that can be interpreted by the printers of the plurality of printer vendors. In the cloud printing service, the information processing apparatus transmits a print job to the cloud printing service using the cloud printer driver, and the cloud printing service transmits the print job to an image forming apparatus to execute printing.

Since the generic printer drivers manage print jobs to be printed by various image forming apparatuses of various vendors, there are limitations on items and functions that can be set to print settings. Thus, extension of print settings in association with a printer driver using identification information about a printer in association with the printer driver has been discussed. This may be implemented using a vendor-specific print setting user interface (vendor-specific print setting UI) and a print job editing function.

An application for extending such print settings (print setting extension application) receives intermediate image data for editing and processing in Extensible Markup Language (XML) format, such as XML Paper Specification (XPS), from the OS. Furthermore, after the editing and processing, the print setting extension application performs conversion to Page Description Language (PDL) for printing.

The OS provides a PDL conversion application programming interface (PDL conversion API) for converting intermediate image data to PDL, and the printer driver and the print setting extension application convert intermediate image data to PDL using the API.

Japanese Patent Application Laid-Open No. 2020-95535 discusses determining whether an image is to be rotated, changing setting commands based on an orientation of the image, and transmitting the changed setting commands to a printer in printing with a generic printer driver.

In generating image data by the generic printer driver, the generic printer driver uses a PDL conversion function provided by an OS. At this time, the PDL conversion function provided by the OS performs an image rotation process based on an orientation of printing target page data and a sheet feed direction in the printer.

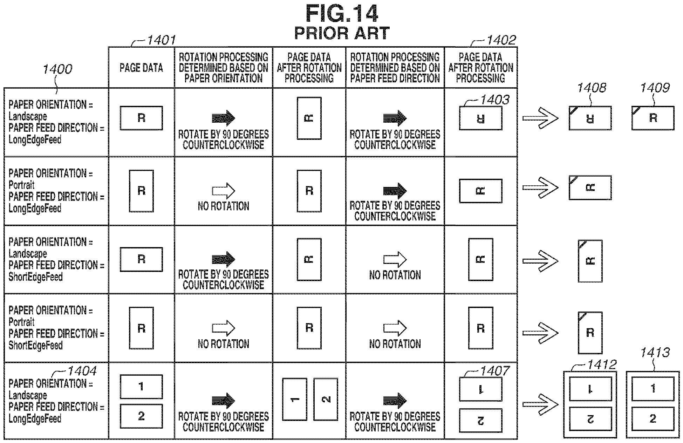

Fig. 14 illustrates an example of image rotations performed by the PDL conversion function provided by the OS. Page data 1401 is a schematic diagram illustrating image data output from the application. Page data 1402 after rotation processing is a schematic diagram illustrating image data output from the PDL conversion function provided by the OS. In a case where printing target page data is a horizontally oriented (landscape) image, the PDL conversion function provided by the OS generates vertically oriented (portrait) image data by rotating the image by 90 degrees to the left. In a case where the sheet feed direction is long edge feed (LongEdgeFeed) in which a sheet is oriented with long edge feed, landscape image data is generated by rotating the image by 90 degrees. For example, in a case where page data is landscape and the sheet feed direction is the long edge feed as specified by an entry 1400 in Fig. 14, original page data is rotated by 90 degrees to the left and then rotated again by 90 degrees to the left. Consequently, an image 1403 rotated by 180 degrees from the original page data is transmitted to the printer. The printer is not notified of the image rotations performed during the use of the PDL conversion function. Thus, the printer performs printing processing based on the orientation of the received image.

Meanwhile, post-processing positions to be transmitted to the printer are not affected by the image rotations performed by the PDL conversion function, and a position that is set by a user via a print setting screen is notified to the printer. Consequently, the printer performs post-processing on the rotated image at the position designated via the print setting screen, and an output item that differs from the result intended by the user is obtained. For example, for settings of printing a landscape image on a sheet fed with the LongEdgeFeed and stapling the top left of the sheet for binding as specified by the entry 1400 in Fig. 14, while an output 1409 is expected, an output 1408 is obtained. Fig. 14 presents schematic diagrams illustrating orientations of the images, image data output in the sheet feed direction by the PDL conversion function, and output items each stapled and bound at the designated top left.

In N-in-1 printing in which images of a plurality of pages are printed on one side of a single sheet, an obtained layout may differ from an intended layout. For example, two pages are printed on one side of a single sheet based on a setting of feeding a landscape image with the LongEdgeFeed as specified by an entry 1404. Image data 1407 is output by the PDL conversion function. In a case where the images of the two pages are arranged on one side of the single sheet based on the image data 1407, while an output 1413 is expected, an output 1412 is obtained. As described above, image rotations provided by the PDL conversion function may result in an output that differs from the intended result.

The present invention is directed to causing a printing apparatus to perform printing as intended by a user.

### SUMMARY OF THE INVENTION

According to a first aspect of the present invention, there is provided a control method as specified in claims 1 to 7. According to a second aspect of the present invention, there is provided an information processing apparatus as specified in claims 8 and 9. According to a third aspect of the present invention, there is provided a computer program comprising instructions as specified in claim 9.

Further features of the present invention will become apparent from the following description of embodiments with reference to the attached drawings.

### BRIEF DESCRIPTION OF THE DRAWINGS

Fig. 1 is a diagram illustrating an example of a system configuration according to an embodiment.
Figs. 2A to 2E are diagrams each illustrating an example of a hardware configuration according to an embodiment.
Figs. 3A and 3B are a diagram illustrating an example of a sequence according to an embodiment.
Figs. 4A, 4B, 4C, and 4D are flowcharts each illustrating an example of a printing workflow process according to an embodiment.
Fig. 5 is a flowchart illustrating an example of a Page Description Language (PDL) conversion flag determination process according to an embodiment.
Figs. 6A to 6D are flowcharts each illustrating an example of a rotation restriction determination process according to an embodiment.
Fig. 7 is a flowchart illustrating an example of an Internet Printing Protocol (IPP) attribute value change determination process according to an embodiment.
Figs. 8A and 8B are diagrams illustrating an example of an attribute value table according to an embodiment.
Fig. 9 is a diagram illustrating an example of combinations of IPP attributes and IPP attribute values according to an embodiment.
Fig. 10 is a diagram illustrating an example of criteria for determining the presence or absence of a rotation capability according to an embodiment.
Fig. 11 is a diagram illustrating an example of a print setting user interface (print setting UI) according to an embodiment.
Figs. 12A and 12B are diagrams each illustrating an example of a preview user interface (preview UI) according to an embodiment.
Fig. 13 is a flowchart illustrating an example of a PDL conversion process according to an embodiment.
Fig. 14 is a diagram illustrating an example of effects of rotation processing during PDL conversion according to the prior art.

### DESCRIPTION OF THE EMBODIMENTS

Various embodiments of the present invention will be described below with reference to the accompanying drawings.

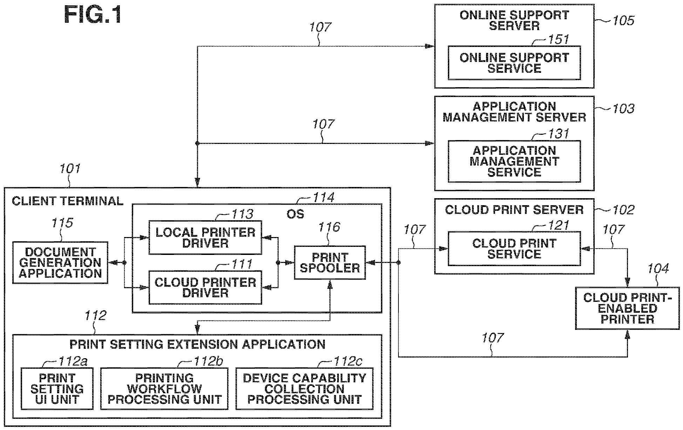

A first embodiment of the present invention will be described below. Fig. 1 is a diagram illustrating a configuration of a printing system in cloud printing according to the present embodiment. A client terminal 101, a cloud print server 102, an application management server 103, a cloud print-enabled printer 104, and an online support server 105 are connected to each other via a network 107. Hereinafter, the cloud print-enabled printer 104 will be referred to as the printer 104.

While one client terminal 101 and one printer 104 are illustrated in Fig. 1, there may be more than one client terminal 101 and more than one printer 104. According to the present embodiment, the printer 104 may receive print data directly from the client terminal 101 or via the cloud print server 102. In another embodiment, the printer 104 does not support a cloud printing service 121 but only supports a system for receiving print data from the client terminal 101 directly.

The cloud print server 102, the application management server 103, and the online support server 105 may be server systems including a plurality of information processing apparatuses.

Configuring each server as a server system including a plurality of information processing apparatuses makes it possible to distribute the load across the plurality of information processing apparatuses.

The cloud print server 102, the application management server 103, and the online support server 105 may be configured virtually in a single physical information processing apparatus.

While the network 107 is intended to be a wide area network (WAN), such as the Internet, for connection to cloud services, the network 107 may entirely be a closed environment, such as an in-house local area network (in-house LAN).

The client terminal 101 serves as an information processing apparatus, such as a personal computer (PC), a tablet, or a smartphone, and is a terminal that is operated directly by users. Any application software can be executed on the client terminal 101.

The cloud print server 102 receives a print instruction and print data from an external source. Then, the cloud print server 102 transmits the received print data to the cloud print-enabled printer 104.

The application management server 103 stores and manages various applications.

The application management server 103 receives identification information about an application and a download request from the client terminal 101 and transmits the application identified based on the received identification information to the client terminal 101.

The online support server 105 is a server apparatus that provides an online support service 151. The online support service 151 is a server apparatus configured to provide the client terminal 101 with files that describe information for extending functions of the client terminal 101.

Software modules 111 to 116 constitute the client terminal 101.

A cloud printer driver 111 is software configured to generate print data that is to be transmitted to the printer 104 via the cloud print server 102. A local printer driver 113 is a printer driver configured to generate print data that is to be transmitted to the printer 104 without using the cloud print server 102. The local printer driver 113 and the cloud printer driver 111 are drivers that are provided by an operating system (OS) vendor that provides an OS 114 of the client terminal 101. The cloud printer driver 111 and the local printer driver 113 are printer drivers configured to generate print data that is interpretable by printers from a plurality of printer vendors, based on the Internet Printing Protocol (IPP).

A print spooler 116 is a print processing management infrastructure provided by the OS 114 and provides functions including managing a processing order related to a printing process, events, and data, generating IPP attributes, converting intermediate image data to Page Description Language (PDL), and transmitting jobs to the printer 104. The local printer driver 113, the cloud printer driver 111, and the print spooler 116 function as generic printing programs.

A document generation application 115 runs on the client terminal 101. Examples of document generation application 115 include a document file application, a spreadsheet application, and a presentation application.

A print setting extension application 112 is provided by one of the plurality of printer vendors that provides the printer 104 used in printing.

The print setting extension application 112 extends functions related to print settings of the local printer driver 113 and/or the cloud printer driver 111 via the print spooler 116 of the OS 114. The print setting extension application 112 functions as a print setting application program.

The printer 104 is a device that actually performs printing on recording media, such as a sheet, and is an image forming apparatus that converts print data received via the network 107 to image data and prints the image data.

A print setting user interface (print setting UI) unit 112a provides the user with a print setting UI that is extended in the print setting extension application 112 by the printer vendor and is a user interface (UI) for the print settings. The print setting UI unit 112a generates the print setting UI based on capability information that the OS 114 and the print setting extension application 112 have acquired from the printer 104 and the cloud printing service 121 and displays the print setting UI.

A printing workflow processing unit 112b performs a process of modifying setting information set via the print setting UI and a process of modifying intermediate image data on images and graphics in Extensible Markup Language (XML) formats, such as XML Paper Specification (XPS). Furthermore, the printing workflow processing unit 112b performs a PDL conversion process of converting such intermediate image data to PDL that can be processed by the printer 104.

A device capability collection processing unit 112c collects device capability information from the print spooler 116 and the printer 104, edits and stores configuration information objects, and passes the configuration information objects to the OS 114 in the print setting extension application 112. The configuration information objects refer to a set of data groups to be used for editing the device capability information.

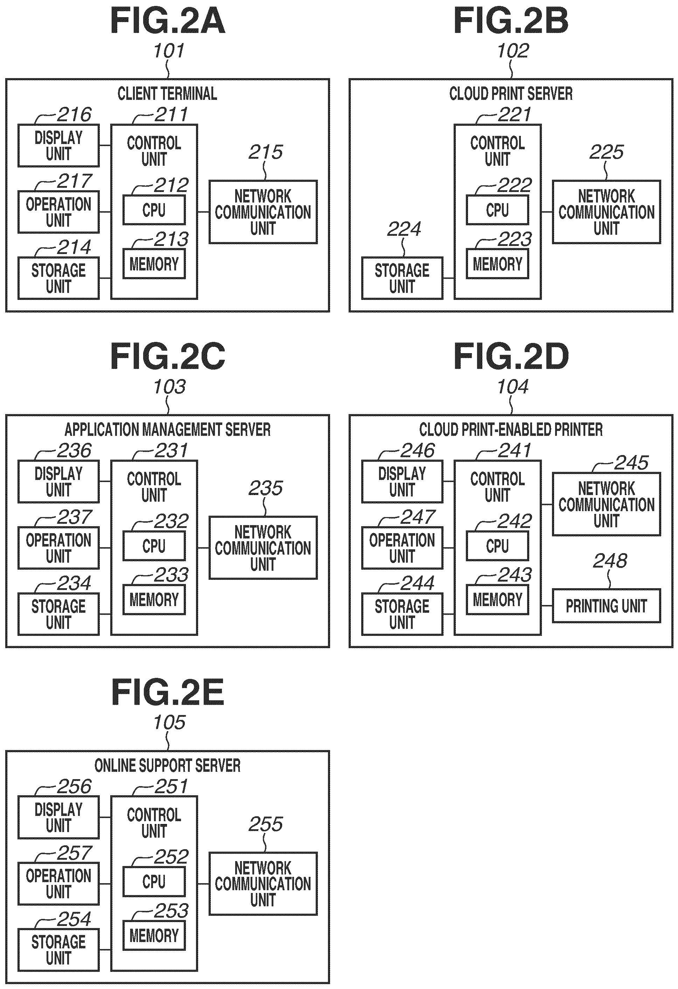

Next, hardware configurations in the system according to the present embodiment will be described below with reference to Figs. 2A to 2E.

Fig. 2A is a block diagram illustrating a hardware configuration of the client terminal 101.

The client terminal 101 includes a display unit 216, an operation unit 217, a storage unit 214, a control unit 211, and a network communication unit 215.

The storage unit 214 refers to a non-volatile storage device, such as a hard disk or a solid state drive (SSD), where digital data can be stored and rewritten.

The control unit 211 includes a central processing unit (CPU) 212 and a memory 213 and controls the operation of the entire client terminal 101. The CPU 212 loads a program stored in the storage unit 214 into the memory 213 and executes the loaded program. The memory 213 is a main memory of the CPU 212 and is used as a work area and a temporary storage area for loading various programs.

The network communication unit 215 is a device that communicates with the external network 107 and performs digital data input and output with external servers and client terminals via the network 107.

The display unit 216 is a device, such as a liquid crystal display, configured to display visual information in real time to the user. The operation unit 217 is a device configured to receive user inputs via a keyboard and a mouse. It is also possible to use, as the display unit 216, a device with the functions of both the display unit 216 and the operation unit 217, such as a touch panel.

Fig. 2B is a block diagram illustrating a hardware configuration of the cloud print server 102. The cloud print server 102 includes a storage unit 224, a control unit 221, and a network communication unit 225.

The storage unit 224, the control unit 221, and the network communication unit 225 correspond to those of the client terminal 101, so that redundant descriptions thereof are omitted.

While a description will be provided of the cloud print server 102 that includes a single information processing apparatus with the hardware configuration illustrated in Fig. 2B, the cloud print server 102 may include a plurality of information processing apparatuses illustrated in Fig. 2B.

Fig. 2C is a block diagram illustrating a hardware configuration of the application management server 103. The application management server 103 includes a display unit 236, an operation unit 237, a storage unit 234, a control unit 231, and a network communication unit 235.

The display unit 236, the operation unit 237, the storage unit 234, the control unit 231, and the network communication unit 235 correspond to those of the client terminal 101, so that redundant descriptions thereof are omitted.

While a description will be provided of the application management server 103 that includes a single information processing apparatus with the hardware configuration illustrated in Fig. 2C, the application management server 103 may include a plurality of information processing apparatuses.

Fig. 2D is a block diagram illustrating a hardware configuration of the printer 104. The printer 104 includes a display unit 246, an operation unit 247, a storage unit 244, a control unit 241, a network communication unit 245, and a printing unit 248.

The display unit 246 is a device configured to display information in real time to the user. Examples of the display unit 246 include a touch panel and a light emitting diode (LED) of the printer 104.

The operation unit 247 is a device configured to receive user inputs and may include hardware keys, such as a numeric keypad, in addition to the touch panel. The storage unit 244 and the control unit 241 correspond to those of the client terminal 101, so that redundant descriptions thereof are omitted.

The network communication unit 245 is a device that communicates with the external network 107 and mainly has roles of receiving print data and transmitting a status, such as an error, of the printer 104 to external servers.

The printing unit 248 is a device that performs a printing process by performing a series of operations including feeding a sheet prepared in a cassette or a tray, printing on the fed sheet, and ejecting the printed sheet. There are no specific limitations on printing methods, and a printing method such as an electrophotographic method or an inkjet method may be used. The printing unit 248 also includes a two-sided unit for use in sheet ejection and a finishing device that performs post-processes, such as stapling and punching processing.

While a single-function printer that only performs a print function is described as an example of the printer 104 according to the present embodiment, a multi-function printer that further includes a scanner function and/or a fax function may be useable.

Fig. 2E is a hardware block diagram illustrating details of the online support server 105. While a description will be provided of the online support server 105 that includes a single information processing apparatus according to the present embodiment, the online support server 105 may include a plurality of information processing apparatuses. The online support server 105 includes a display unit 256, an operation unit 257, a storage unit 254, a control unit 251, and a network communication unit 255. The display unit 256 and the operation unit 257 correspond to the display unit 216 and the operation unit 217 of the client terminal 101, so that redundant descriptions thereof are omitted. The storage unit 254 is a memory device, such as a hard disk drive (HDD) or an SSD. The storage unit 254 stores the files that describe information for extending the functions provided by the client terminal 101.

The control unit 251 includes a CPU 252 and a memory 253. The CPU 252 controls the entire online support server 105. The memory 253 is used in processes that the CPU 252 executes. The network communication unit 255 is an interface via which the online support server 105 communicates with the client terminal 101. The online support server 105 receives an acquisition request for a file stored in the storage unit 254 and transmits the corresponding file to the client terminal 101 via the network communication unit 255.

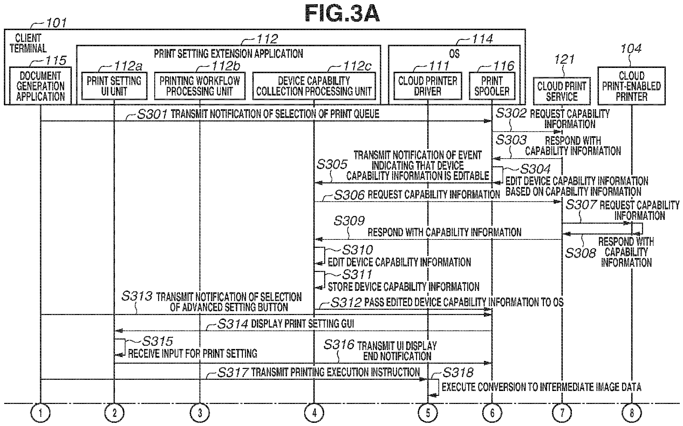

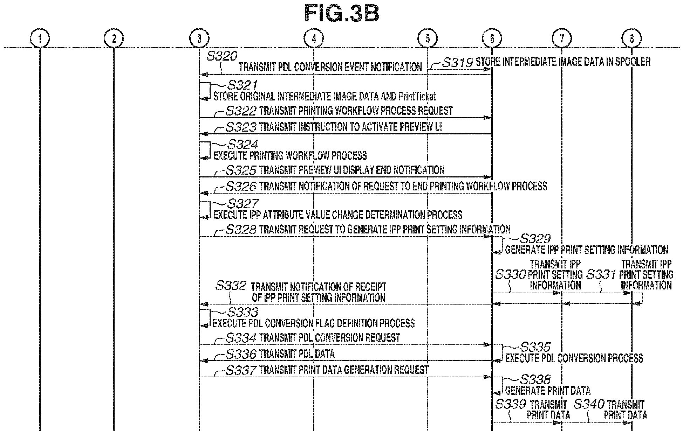

Next, an example of a procedure through which the user performs printing and a sequence between the software and the cloud printing service 121 during printing according to the present embodiment will be described below with reference to Figs. 3A and 3B. Processes of registering the printer 104 in the cloud printing service 121, generating a print queue in the client terminal 101 for printing with the printer 104, and installing the print setting extension application 112 are completed in advance.

In step S301, the print spooler 116 receives user selection of the print queue for the printer 104 from the document generation application 115.

Next, in step S302, the print spooler 116 requests capability information about the printer 104 from the cloud printing service 121. Setting items for which the print spooler 116 queries capability information is determined based on the print setting items supported by the OS 114. The print spooler 116 queries capability information from the cloud printing service 121 using the standard IPP, such as Get-printer-Attributes.

In step S303, the cloud printing service 121 responds to the print spooler 116 with the capability information about the printer 104. In step S303, the cloud printing service 121 transmits the capability information acquired from the printer 104 and registered in advance to the print spooler 116.

In step S304, the print spooler 116 adds the capability information acquired in step S303 to device capability information stored in advance. The device capability information refers to information about setting items and setting values that can be set for the printing with the printer 104. The OS 114 and the print setting extension application 112 display a print setting screen based on PrintCapabilities generated based on the device capability information. In step S304, the device capability information stored in advance in the print spooler 116 may be overwritten with the capability information acquired from the cloud printing service 121.

Next, in step S305, the print spooler 116 notifies the print setting extension application 112 of an event indicating that the device capability information is editable. After receiving the event, the print setting extension application 112 becomes capable of using an application programming interface (API) of the OS 114 that is capable of editing the device capability information. Thus, the device capability collection processing unit 112c of the print setting extension application 112 after receiving the event becomes capable of acquiring capability information that is not supported by the OS 114 from the cloud printing service 121.

In step S306, the device capability collection processing unit 112c of the print setting extension application 112 requests the capability information about the cloud print-enabled printer 104 from the cloud printing service 121. The print setting extension application 112 stores in advance the setting items for which capability information is queried. Capability information is queried for the stored setting items from the cloud printing service 121 using an IPP Get-Printer-Attributes command. The query for capability information in step S306 may be performed for the same setting items as those in step S302 or for different setting items from those in step S302.

The capability information acquisition performed by the print setting extension application 112 in step S306 enables the print setting extension application 112 to acquire information about the setting items and the setting values that are not supported by the OS 114.

In step S307, the cloud printing service 121 that has received the request for the capability information requests the capability information from the printer 104 using the IPP. In step S308, the printer 104 responds to the cloud printing service 121 with the requested capability information. In step S309, the cloud printing service 121 responds to the device capability collection processing unit 112c of the print setting extension application 112 with the requested capability information. According to the present embodiment, the query is transmitted to the printer 104 in step S307, and the capability information is acquired in step S308. The cloud printing service 121 may respond with the capability information that is stored in advance to the device capability collection processing unit 112c without performing steps S307 and S308.

In step S310, the device capability collection processing unit 112c of the print setting extension application 112 edits the device capability information of the OS 114 based on the acquired capability information. The device capability collection processing unit 112c edits the device capability information using the configuration information objects. Since the device capability collection processing unit 112c of the print setting extension application 112 is not capable of directly editing the device capability information of the OS 114, the device capability collection processing unit 112c uses the configuration information objects to edit the device capability information of the OS 114.

In step S311, the device capability collection processing unit 112c duplicates the capability information acquired by the device capability collection processing unit 112c and the capability information acquired by the OS 114 as device capability information data on the device capability collection processing unit 112c and stores the device capability information data in a data storage area of the print setting extension application 112.

Next, in step S312, the device capability collection processing unit 112c of the print setting extension application 112 passes the edited device capability information to the OS 114.

The OS 114 updates the device capability information managed by the OS 114 using the device capability information received from the device capability collection processing unit 112c of the print setting extension application 112.

In step S313, in a case where an advanced setting button is selected on a print setting screen provided by the document generation application 115, the print spooler 116 is notified of the selection.

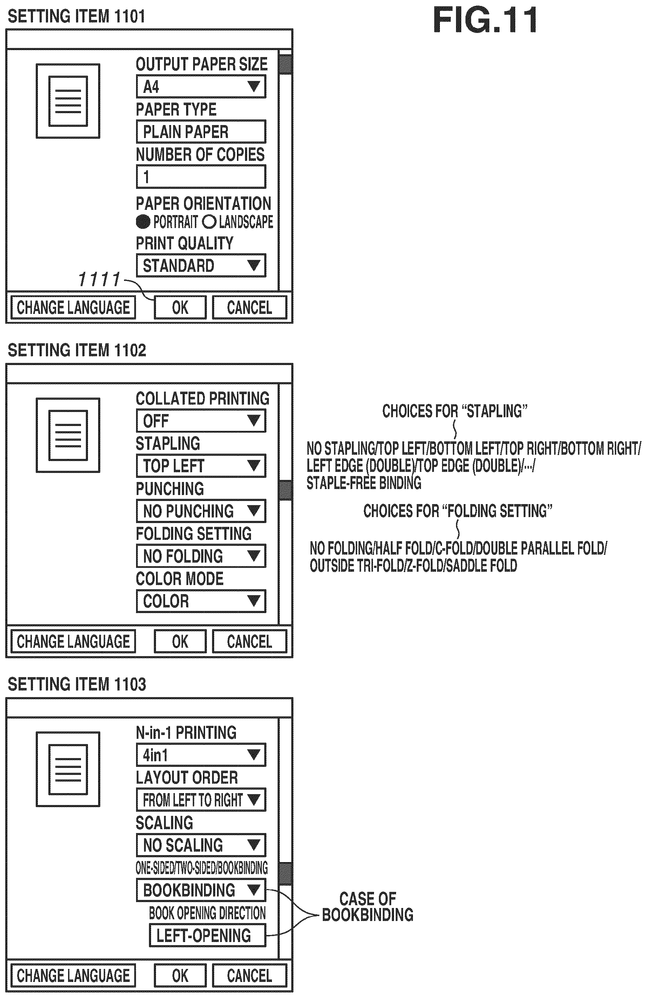

In step S314, the print setting UI unit 112a is activated from the OS 114 and displays a print setting screen as illustrated in Fig. 11. The print setting UI unit 112a receives, from the print spooler 116, PrintCapabilities based on the device capability information and a Print Ticket indicating current print settings. The print setting UI unit 112a displays a print setting UI based on the PrintCapabilities and the PrintTicket. The PrintTicket refers to a file that describes print setting information described in XML format.

Fig. 11 illustrates an example of a print setting graphical user interface (print setting GUI) displayed by the print setting extension application 112 based on the PrintCapabilities and the PrintTicket. The print setting GUI displayed by the print setting extension application 112 includes setting items and setting values that are specific to the printer vendor (manufacturer).

Examples of the setting items and the setting values that are specific to the printer vendor include "staple-free binding", which is an option in a "stapling" function, and "saddle fold", which is an option in a "folding setting" function, of a setting item 1102 and "bookbinding" of a setting item 1103 in Fig. 11.

While Fig. 11 illustrates an example of adding options to the functions, it is needless to say that adding new functions is also possible.

The print setting screen is not dependent on the type of the document generation application 115 to be used, and any print setting screen supported by the print setting extension application 112 can be displayed.

The print setting extension application 112 receives the PrintCapabilities and the PrintTicket generated from the device capability information by the OS 114 and displays the PrintCapabilities and the PrintTicket as print settings on the UI. In step S315, the print setting UI unit 112a receives inputs for the print settings.

In a case where an "OK" button 1111 on the print setting screen in Fig. 11 is selected by the user, the print setting UI unit 112a ends the print setting screen display. At this time, the print setting UI unit 112a writes the setting values set via the UI to the PrintTicket and updates the current print settings. After the print setting UI unit 112a ends the print setting screen display, an operation screen for the user returns to the print setting screen provided by the document generation application 115.

In step S316, the print setting UI unit 112a transmits a UI end notification with the PrintTicket to the print spooler 116 of the OS 114 and completes the processing on the print setting screen of the print setting extension application 112.

In a case where a printing execution instruction is issued by the user on the print setting screen displayed by the document generation application 115, a process described in step S317 is executed.

In step S317, the document generation application 115 transmits the printing execution instruction to the cloud printer driver 111. The cloud printer driver 111 receives the PrintTicket and image data from the document generation application 115.

In step S318, the cloud printer driver 111 converts the image data received from the document generation application 115 to intermediate image data. The intermediate image data refers to data generated before conversion to print data, such as PDL, and examples thereof include data in XPS format.

In step S319, the intermediate image data generated by the cloud printer driver 111 is stored in the print spooler 116 of the OS 114.

In step S320, after receiving the intermediate image data, the print spooler 116 of the OS 114 notifies the printing workflow processing unit 112b in the print setting extension application 112 of a PDL conversion event. The PDL conversion event refers to a process of converting the intermediate image data to PDL which is processable by the printer 104. In step S320, the printing workflow processing unit 112b receives the intermediate image data and the PrintTicket together with the event notification from the print spooler 116 of the OS 114.

In step S321, the printing workflow processing unit 112b stores the intermediate image data received in step S320 as "original intermediate image data" with the PrintTicket, in the data storage area of the print setting extension application 112. The original intermediate image data refers to the intermediate image data before the print settings are applied.

In step S322, after receiving the PDL conversion event notification, the printing workflow processing unit 112b transmits a printing workflow process request to the print spooler 116 of the OS 114. The printing workflow process herein refers to a process of changing the setting information set via the print setting UI and a process of editing and processing the intermediate image data.

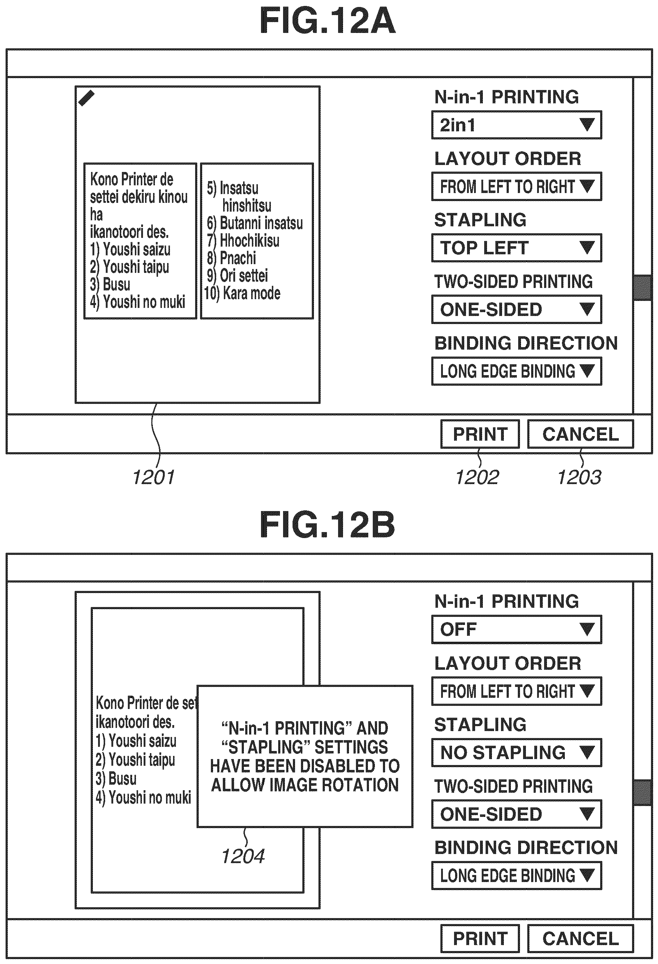

In step S323, in response to receiving the printing workflow process request, the print spooler 116 of the OS 114 requests the printing workflow processing unit 112b to activate a preview UI (Fig. 12A) based on the details of the received request. Fig. 12A illustrates an example of the preview UI according to the present embodiment. A preview image reflecting the print settings is displayed in a region 1201. The preview image herein reflects the N-in-1 printing setting set to "2in1" and the stapling processing applied to the top left. The print settings can be changed via the preview UI, and the preview image displayed in the region 1201 changes based on the changed print settings. A "print" button 1202 is used for issuing an instruction to start printing. A "cancel" button 1203 is used for cancelling the print settings and stopping the process for printing.

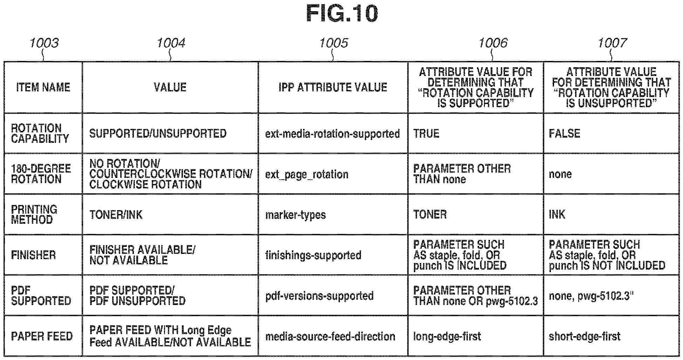

In step S324, after receiving the request to activate the preview UI (Fig. 12A), the printing workflow processing unit 112b executes the printing workflow process. Details of the printing workflow process (step S324) will be described below. In response to the "print" button 1202 being selected on the preview UI illustrated in Fig. 10A, a process described in step S325 is executed.

In step S325, the printing workflow processing unit 112b transmits a preview UI (Fig. 12A) display end notification to the print spooler 116. In step S326, the print spooler 116 requests the printing workflow processing unit 112b to end the printing workflow process.

In step S327, the printing workflow processing unit 112b executes an IPP attribute value change determination process as a printing workflow ending process. Details of the IPP attribute value change determination process (step S327) will be described below.

In step S328, after determining which IPP attribute value to change, the printing workflow processing unit 112b designates the IPP attribute and the IPP attribute value to change using the API of the OS 114 and transmits a request to generate IPP print setting information to the print spooler 116. The IPP print setting information refers to print setting information defined using the combination of the IPP attribute and the IPP attribute value.

Next, in step S329, in response to receiving the request, the print spooler 116 generates IPP print setting information. The print spooler 116 converts the setting items and the setting values that are described in the PrintTicket to attribute information and attribute values that are defined by IPP, and generates IPP print setting information. For the attribute information designated by the printing workflow processing unit 112b, the print spooler 116 sets the designated attribute information and the attribute values in the IPP print setting information.

In step S330, the print spooler 116 transmits the IPP print setting information to the cloud printing service 121. In step S331, the cloud printing service 121 transmits the IPP print setting information to the cloud print-enabled printer 104.

In step S332, the printer 104 notifies the printing workflow processing unit 112b of reception of an IPP print setting information via the cloud printing service 121 and the print spooler 116 of the OS 114.

Next, in step S333, the printing workflow processing unit 112b generates intermediate data for printing and executes a PDL conversion flag determination process to determine a processing flag in PDL conversion. Details of the PDL conversion flag determination process (step S333) will be described below.

Next, in step S334, the printing workflow processing unit 112b passes the edited and processed intermediate image data for printing and the PDL conversion control flag to the print spooler 116 of the OS 114 and transmits a request for conversion to a final PDL to the print spooler 116 of the OS 114.

Next, in step S335, the print spooler 116 of the OS 114 executes a PDL conversion process using the edited and processed intermediate image data for printing and the PDL conversion control flag. Details of the PDL conversion process (step S335) will be described below.

In step S336, after the PDL conversion process (step S335), the print spooler 116 transmits final PDL data to the printing workflow processing unit 112b.

Next, in step S337, the printing workflow processing unit 112b passes the PDL data to the print spooler 116 of the OS 114 and transmits a print data generation request to the print spooler 116 of the OS 114.

In step S338, the print spooler 116 of the OS 114 generates print data for transmitting the final PDL passed from the printing workflow processing unit 112b to the printer 104 using the IPP.

In step S339, the print spooler 116 of the OS 114 transmits the print data including the final PDL to the cloud printing service 121 via the print queue.

In step S340, the cloud printing service 121 transmits the print data passed from the print spooler 116 of the OS 114 to the printer 104.

While cloud printing is described as an example in the processing, an equivalent process is also applicable to local printing. In the case of local printing, the cloud printer driver 111 in Figs. 3A and 3B is replaced with the local printer driver 113. Furthermore, the cloud printing service 121 in Figs. 3A and 3B is replaced with the printer 104.

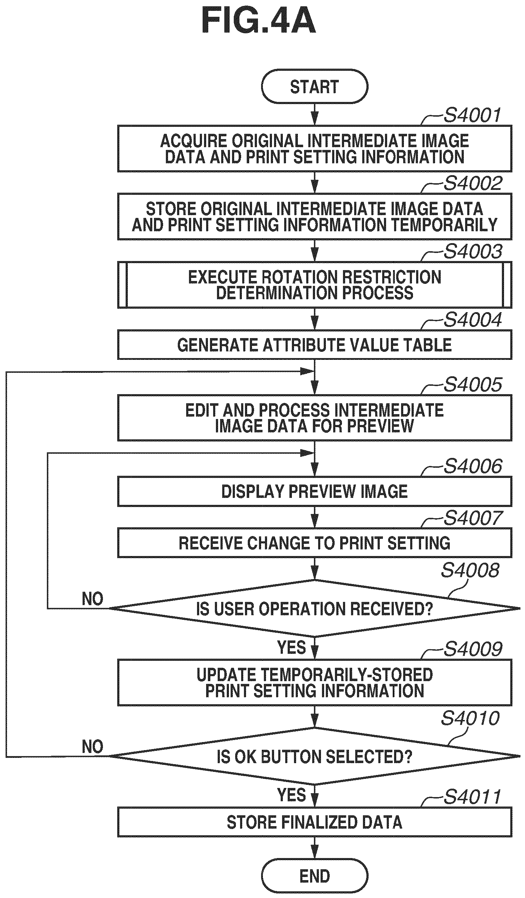

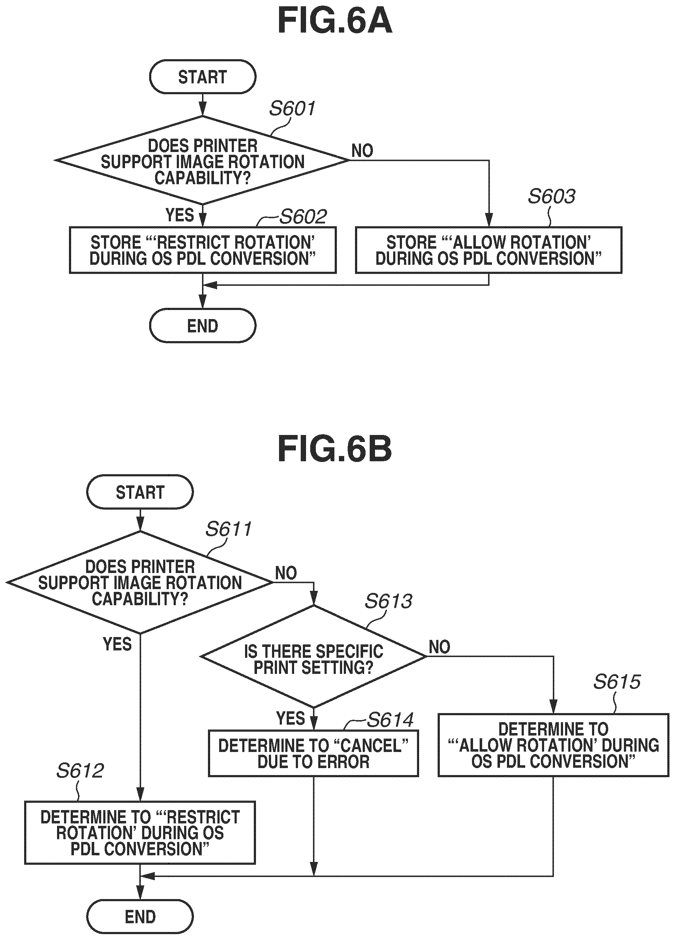

Next, details of the printing workflow process (step S324) will be described below with reference to Figs. 4A and 6A. In the following example, the determination is performed based on an image rotation capability in the capability information about the printer 104.

Initially, in step S4001, the printing workflow processing unit 112b acquires the original intermediate image data and the PrintTicket describing the print setting information that are stored in step S321.

Next, in step S4002, the printing workflow processing unit 112b temporarily stores the original intermediate image data and the print setting information described in the PrintTicket as temporarily-stored print setting information in the storage area.

Next, in step S4003, the printing workflow processing unit 112b executes a rotation restriction determination process.

Details of the rotation restriction determination process (step S4003) will be described below.

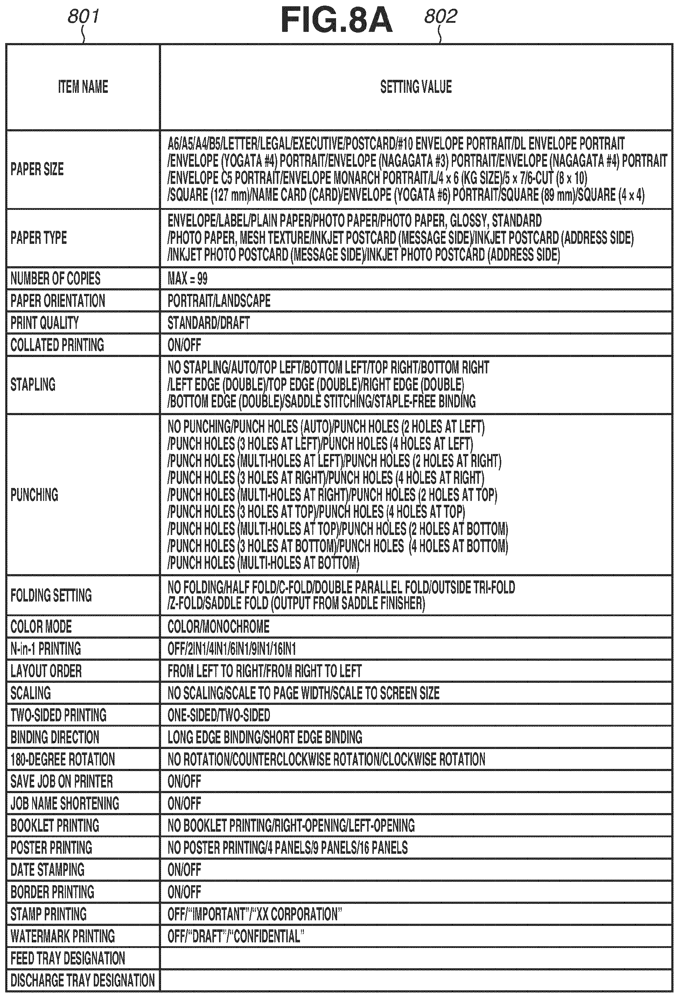

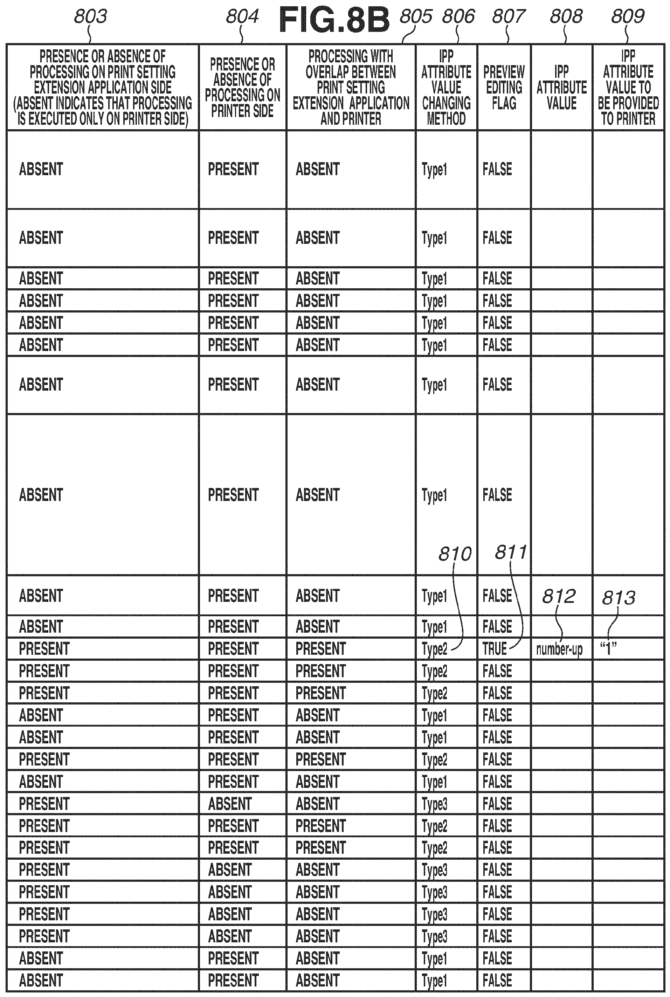

In step S4004, after the rotation restriction determination process, the printing workflow processing unit 112b generates an attribute value table (Figs. 8A and 8B) based on print setting item information stored in a program of the print setting extension application 112. The attribute value table is used for managing the setting values for use in editing the intermediate image data by the print setting extension application 112 and the setting values changed via the preview UI.

An item name 801 corresponding to a print setting item is generated by the printing workflow processing unit 112b based on information stored in advance in the program. The item name 801 specifies a name of the setting item that can be set using the print setting extension application 112.

A setting value 802 is generated based on the device capability information stored in step S311. The setting value 802 specifies setting values that can be set for each print setting item.

A "presence or absence of processing on print setting extension application side" 803 is generated by the printing workflow processing unit 112b based on the information stored in advance in the program. The "presence or absence of processing on print setting extension application side" 803 specifies whether the print setting extension application 112 is capable of performing processes corresponding to the setting values of the setting items.

A "presence or absence of processing on printer side" 804 is generated based on the capability information stored in step S311. The "presence or absence of processing on printer side" 804 specifies whether the printing apparatus is capable of performing the processes corresponding to the setting values of the setting items.

A "processing with overlap between print setting extension application and printer" 805 is generated based on information in the "presence or absence of processing on print setting extension application side" 803 and the "presence or absence of processing on printer side" 804. In a case where the "presence or absence of processing on print setting extension application side" 803 and the "presence or absence of processing on printer side" 804 are both "present", "present" is set in the "processing with overlap between print setting extension application and printer" 805. On the other hand, in a case where the "presence or absence of processing on print setting extension application side" 803 or the "presence or absence of processing on printer side" 804 is "absent", "absent" is set in the "processing with overlap between print setting extension application and printer" 805.

An IPP attribute value changing method 806 is generated based on the "presence or absence of processing on print setting extension application side" 803 and the "presence or absence of processing on printer side" 804. In a case where the "presence or absence of processing on print setting extension application side" 803 is "absent" and the "presence or absence of processing on printer side" 804 is "present", "Type 1" is set in the IPP attribute value changing method 806. Type 1 indicates that the print setting extension application 112 does not perform the process corresponding to the setting item on the intermediate image data. In a case where the "presence or absence of processing on print setting extension application side" 803 is "present" and the "presence or absence of processing on printer side" 804 is "present", "Type 2" is set in the IPP attribute value changing method 806. Type 2 indicates that both the print setting extension application 112 and the printer 104 can perform the process corresponding to the setting item on the intermediate image data. In a case where the "presence or absence of processing on print setting extension application side" 803 is "present" and the "presence or absence of processing on printer side" 804 is "absent", "Type 3" is set in the IPP attribute value changing method 806. Type 3 indicates that not the print setting extension application 112 but the printer 104 performs the process corresponding to the setting item on the intermediate image data.

A preview editing flag 807 is an area for storing a flag indicating whether editing and/or process are/is performed on the intermediate image data during the preview display. At the time the attribute value table is generated, "FALSE" is set for all the setting items.

An IPP attribute 808 is an IPP attribute corresponding to a target print setting. In this example, the IPP attribute 808 is set only for the setting item that the print setting extension application 112 uses in generating a preview image. Every IPP attribute 808 is also blank at the time the attribute value table is generated.

An "IPP attribute value to be provided to printer" 809 stores the IPP attribute value determined in the IPP attribute value change determination process (step S327). Details of the IPP attribute value change determination process (step S327) will be described below.

The information in the preview editing flag 807 is set in a finalized data storing process in step S4010 described below, and the information in the IPP attribute 808 and the "IPP attribute value to be provided to printer" 809 are set in an attribute value table updating process in step S707 described below.

Refer back to the description of Fig. 4A. In step S4005, after the attribute value table generation process (step S4004), the printing workflow processing unit 112b duplicates the original intermediate image data temporarily stored in step S4002 and generates intermediate image data (XPS) for preview. The intermediate image data for preview is the intermediate image data reflecting at least one of the setting values of the setting items of Type 2 and Type 3 among the setting items in Figs. 8A and 8B.

Next, in step S4006, the printing workflow processing unit 112b displays the edited and processed intermediate image data as a preview image on the preview UI (Fig. 12A).

In step S4007, changes to the print settings are received via the preview UI (Fig. 12A).

The print settings received via the preview UI (Fig. 12A) may be different from the print settings that can be designated via a first print setting UI (Fig. 11). For example, the display of the settings that are primarily set to "auto", such as "feed tray" and "discharge tray", may be omitted on the preview UI (Fig. 12).

Next, in step S4008, the printing workflow processing unit 112b determines whether a user operation is received. The printing workflow processing unit 112b continues to display the preview (step S4006) and receive changes to the print settings (step S4007) until a user operation is detected (YES in step S4008).

In step S4009, in a case where a user operation is detected by the printing workflow processing unit 112b, even if there is a change to the print settings, the printing workflow processing unit 112b updates the temporarily-stored print setting information.

In step S4010, the printing workflow processing unit 112b determines whether an OK button on the preview UI is selected. The printing workflow processing unit 112b returns to step S4005 and repeats the process of editing and processing the intermediate image data, the process of displaying the preview, and the process of receiving changes to the print settings, until the press of the OK button is detected in step S4010. This makes it possible to reflect the changes to the setting values that are received via the preview UI into the preview image displayed on the preview UI.

In a case where the press of the "OK" button is detected by the printing workflow processing unit 112b in step S4010 (YES in step S4010), the printing workflow processing unit 112b executes a process described in step S4011.

In step S4011, the printing workflow processing unit 112b stores the original intermediate image data stored in step S4002 and the temporarily-stored print setting information updated in step S4009 in the data storage area of the print setting extension application 112 (finalized data storing process).

At this time, the printing workflow processing unit 112b also updates the attribute value table (Figs. 8A and 8B) based on the editing status being previewed. The preview editing flag 807 is set to TRUE for each setting item that requires the print setting extension application 112 to process the intermediate image data based on the data stored in step S4011. The setting item that requires the print setting extension application 112 to process the intermediate image data refers to an item for which Type 2 or Type 3 is set in the preview editing flag 807. For example, in a case where the N-in-1 printing setting is other than OFF in the data stored in step S4011, the preview editing flag 807 for the N-in-1 printing is set to TRUE as in an entry 811.

Next, details of the rotation restriction determination process (step S4003) will be described below with reference to Figs. 6A and 10. Fig. 6A is realized by the CPU 212 through execution of a program stored in the print setting extension application 112.

In step S601, the printing workflow processing unit 112b reads the device capability information stored in step S311 and determines whether the printer 104 supports the capability to rotate an image of one page.

Specifically, the printing workflow processing unit 112b refers to "rotation capability" (ext-media-rotation-supported IPP attribute) information in the device capability information stored in step S311. In a case where this attribute value is TRUE, the printing workflow processing unit 112b determines that the "rotation capability is supported", whereas in a case where the attribute value is FALSE, the printing workflow processing unit 112b determines that the "rotation capability is unsupported".

In a case where the printing workflow processing unit 112b determines that the printer 104 supports the image rotation capability (YES in step S601), the processing proceeds to step S602. In step S602, the printing workflow processing unit 112b stores "'restrict rotation' during OS PDL conversion" in a storage area to which the print setting extension application 112 can refer.

In a case where the printing workflow processing unit 112b determines that the printer 104 does not support the image rotation capability (NO in step S601), the processing proceeds to step S603. In step S603, the printing workflow processing unit 112b stores "'allow rotation' during OS PDL conversion" in the storage area to which the print setting extension application 112 can refer.

In the above-described method according to the present embodiment, the capability information "rotation capability" acquired from the printer 104 is referred to in the determination as to whether the rotation capability is supported, and the determination is performed based on the attribute value of "rotation capability". The determination may be performed based on other capability information. Fig. 10 illustrates a table of the device capability information about the printer 104 and attributes that can be used in the determination as to whether the printer 104 supports the image rotation capability. The table illustrated in Fig. 10 is a table stored in advance by the print setting extension application 112.

In Fig. 10, an "item name" 1003 specifies an item name of each setting item. A "value" 1004 specifies values that can be selected for each item. An "IPP attribute" 1005 specifies attribute information corresponding to each item name and is used in communicating with the printer 104 via IPP. An "attribute value for determining that `rotation capability is supported'" 1006 specifies a value used to determine that the printer 104 supports the image rotation capability in a case where the value is included in the device capability information about the printer 104. An "attribute value for determining that `rotation capability is unsupported'" 1007 specifies that in a case where there is only the capability information described in the device capability information about the printer 104, it is determined that the printer 104 does not support the image rotation capability. While both the "attribute value for determining that `rotation capability is supported'" 1006 and the "attribute value for determining that `rotation capability is unsupported'" 1007 are described in Fig. 10, only one of them may be stored, and the determination in step S601 may be performed based on the stored information.

For example, one of the items of the capability information in Fig. 10 may be referred to in the determination as to whether the printer 104 supports the image rotation capability in step S601. In a case where at least one item of the device capability information includes an "attribute value for determining that `rotation capability is supported'", it may be determined that the rotation capability is supported.

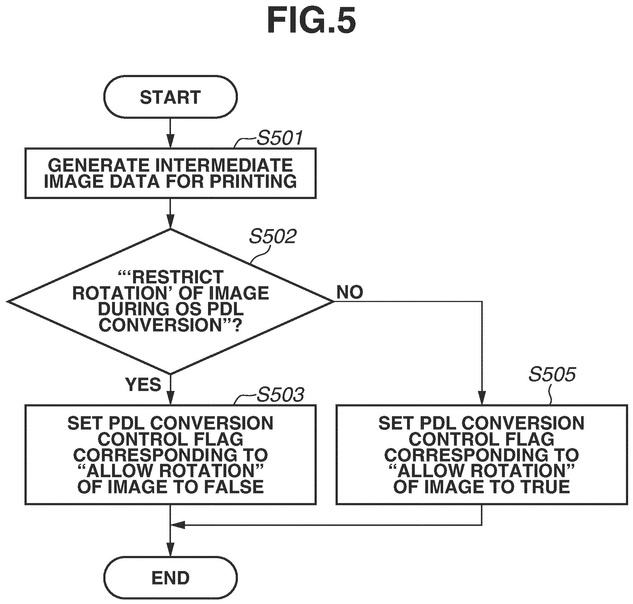

Next, details of the PDL conversion flag determination process (step S333) will be described below with reference to Fig. 5.

A process illustrated in Fig. 5 is realized by the CPU 212 through execution of a program stored in the print setting extension application 112.

The printing workflow processing unit 112b reads, from the data storage area of the print setting extension application 112, the original intermediate image data stored in step S321 and the finalized print setting information stored in step S4011 and performs editing and processing on the original intermediate image data. In step S501, the printing workflow processing unit 112b generates edited and processed intermediate image data for printing. The original intermediate image data here refers to the intermediate image data generated by the cloud printer driver 111 in step S318.

Next, in step S502, the printing workflow processing unit 112b refers to a result of the rotation restriction determination process (step S4003). In step S502, the printing workflow processing unit 112b performs the determination based on the information stored in step S602 or S603 in Fig. 6A.

In a case where it is determined to "`restrict rotation' during OS PDL conversion" (YES in step S502), the processing proceeds to step S503. In step S503, the printing workflow processing unit 112b sets the PDL conversion control flag corresponding to "allow rotation" of images to FALSE. The PDL conversion control flag is used as a parameter in executing the OS PDL conversion process.

In a case where it is determined to "'allow rotation' during OS PDL conversion" (NO in step S502), the processing proceeds to step S505. In step S505, the printing workflow processing unit 112b sets the PDL conversion control flag corresponding to "allow rotation" to TRUE. The PDL conversion control flag is used as a parameter for determining whether OS image rotation is allowed during execution of the OS PDL conversion process.

In steps S503 and S505 in Fig. 5, the PDL conversion control flag corresponding to "allow rotation" is set to TRUE or FALSE. There may be two types of flags that are the PDL conversion control flag corresponding to "allow rotation" of images and the PDL conversion control flag corresponding to "restrict rotation" of images.

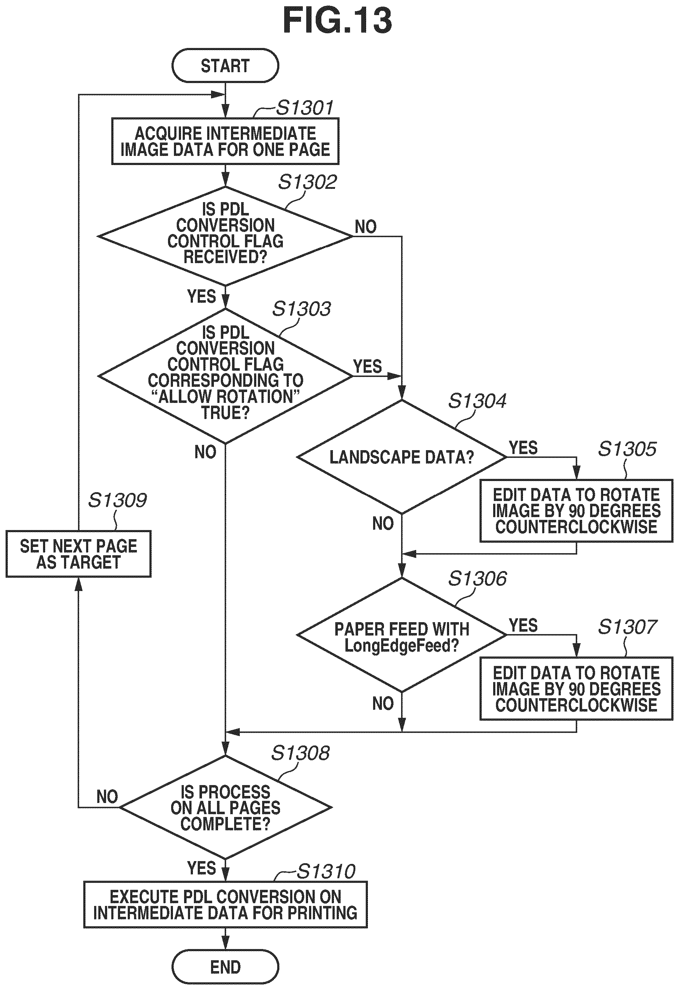

Next, details of the PDL conversion process (step S335) will be described below with reference to Fig. 13. The PDL conversion described in this example is one example. The process illustrated in Fig. 13 is realized by the CPU 212 through execution of a program provided by the OS 114.

In step S1301, the print spooler 116 of the OS 114 extracts data for one page from the intermediate data for printing that is received from the printing workflow processing unit 112b in step S334.

Next, in step S1302, the print spooler 116 of the OS 114 determines whether the PDL conversion control flag has been received from the printing workflow processing unit 112b in step S334.

In a case where the PDL conversion control flag has not been received (NO in step S1302), the processing proceeds to step S1304. In step S1304, the print spooler 116 of the OS 114 determines whether the extracted data for one page is landscape (horizontally oriented) image data.

In a case where the extracted data for one page is landscape data (YES in step S1304), the processing proceeds to step S1305. In step S1305, the print spooler 116 of the OS 114 edits the data to rotate the image of the page by 90 degrees counterclockwise. In a case where the extracted data for one page is not landscape image data (NO in step S1304), the processing proceeds to step S1306.

Next, in step S1306, the print spooler 116 of the OS 114 refers to the print setting information received from the printing workflow processing unit 112b in step S329 and determines whether a sheet feed direction of a designated sheet feed is LongEdgeFeed. The sheet feed direction of the sheet feed is acquired in step S309 in Figs. 3A and 3B. The LongEdgeFeed is a sheet feeding method in which a sheet is oriented with long edge feed.

In a case where the sheet feed direction of the designated sheet feed is the LongEdgeFeed (YES in step S1306), the processing proceeds to step S1307. In step S1307, the print spooler 116 of the OS 114 edits the data to rotate the image of the extracted one page by 90 degrees counterclockwise. In a case where the sheet feed direction of the designated sheet feed is not the LongEdgeFeed (NO in step S1306), the processing proceeds to step S1308.

In a case where the PDL conversion control flag has been received (YES in step S1302), the processing proceeds to step S1303. In step S1303, the print spooler 116 of the OS 114 determines whether the PDL conversion control flag corresponding to "allow rotation" is TRUE. More specifically, the print spooler 116 determines whether OS image rotation is allowed. In a case where the PDL conversion control flag corresponding to "allow rotation" is TRUE (YES in step S1303), the print spooler 116 executes processes described in steps S1304 to S 1307.

In a case where the PDL conversion control flag corresponding to "allow rotation" is FALSE (NO in step S1303), the processing proceeds to step S1308. In step S1308, the print spooler 116 determines whether the process on all pages has been completed, without processing the extracted data of one page. In a case where the print spooler 116 determines that the process on all pages has been completed (YES in step S1308), the processing proceeds to step S1310. In step S1310, the print spooler 116 executes PDL conversion on the intermediate data for printing.

In a case where the print spooler 116 determines that there remains an unprocessed page (NO in step S1308), the processing proceeds to step S1309. In step S1309, the print spooler 116 sets the next page following the page being processed to a processing target page. Thereafter, the print spooler 116 repeats the operations in steps S1301 to S1308.

The image rotation and PDL generation processes by the print spooler 116 have been described above.

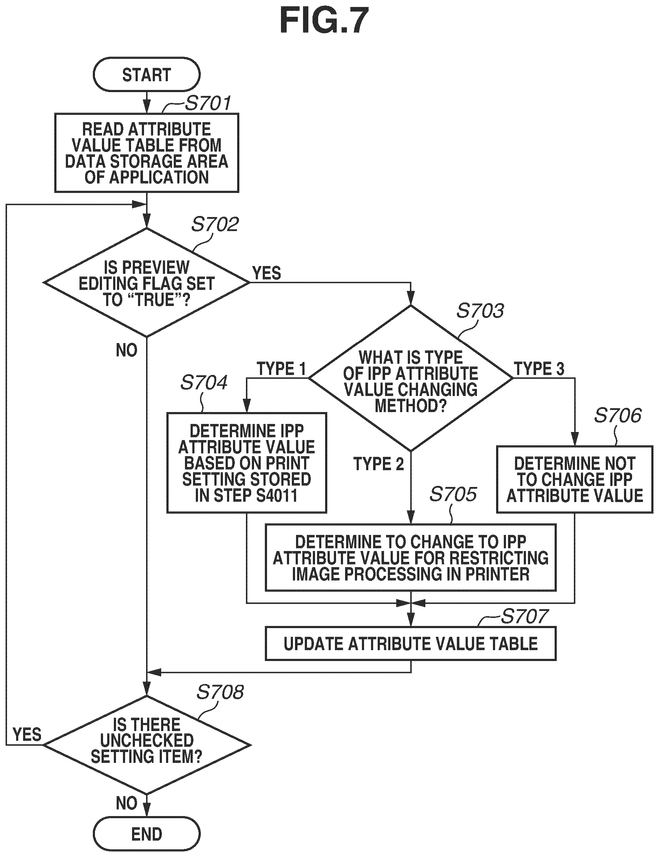

Next, details of the IPP attribute value change determination process (step S327) will be described below with reference to Figs. 7 and 8. The process illustrated in Fig. 7 is realized by the CPU 212 through execution of a program provided by the print setting extension application 112.

In step S701, the printing workflow processing unit 112b reads the attribute value table (Figs. 8A and 8B) from the data storage area of the print setting extension application 112.

In step S702, the printing workflow processing unit 112b checks the preview editing flag 807 for each setting item recorded in the attribute value table.

In a case where the preview editing flag 807 is "TRUE" (YES in step S702), the processing proceeds to step S703. In step S703, the printing workflow processing unit 112b similarly checks the IPP attribute value changing method 806 recorded in the attribute value table.

According to the present embodiment, the types of the IPP attribute value changing method are classified into Type 1, Type 2, and Type 3 and defined. The print setting extension application 112 stores, in the program, the type (Type 1, Type 2, Type 3) of the IPP attribute value changing method for each function as a fixed value.

Type 1 indicates a classification of a changing method in which "an IPP attribute value to be changed to is determined based on the data stored in step S4011". Type 1 applies to the functions where the processing with an overlap between the print setting extension application and the printer is "absent", the processing on the print setting extension application side is "absent", and the processing on the printer side is "present". In the case of Type 1, since the processing is executed on the printer side, the IPP attribute value is to be changed based on the print settings stored in step S4011.

Type 2 indicates a classification of the changing method in which "the IPP attribute value is changed so that the process of the corresponding print setting item is restricted from being executed by the printer". Type 2 applies to the functions where the processing with an overlap between the print setting extension application and the printer is "present" and the processing on the print setting extension application side and the processing on the printer side are both "present". In the case of Type 2, it is necessary to ensure that the processing on the print setting extension application side and the processing on the printer side do not overlap.

For example, in a case where the "N-in-1 printing" setting is designated as "2-in-1" by the print setting UI unit 112a, the "2-in-1" setting is converted to an IPP attribute value by the OS 114. Meanwhile, the intermediate image data that has been edited and processed into "2-in-1" format is generated in the print setting extension application 112. At this time, if the "2-in-1" setting is transmitted as an IPP attribute value to the printer 104 together with the PDL generated from the intermediate image data in "2-in-1" format, the intended output result may not be obtained. Thus, it is necessary to "change the IPP attribute value so that the process of the corresponding print setting item is restricted from being executed by the printer".

Type 3 indicates a classification of the changing method in which "IPP attribute value is not changed". Type 3 applies to the functions where the processing with an overlap between the print setting extension application and the printer is "absent", the processing on the print setting extension application side is "present", and the processing on the printer side is "absent". In the case of Type 3, it is unnecessary to change the IPP attribute value based on the finalized print setting information.

In a case where the type of the IPP attribute value changing method is "Type 1", since the processing is executed on the printer side, it is necessary to change the IPP attribute value based on the print settings stored in step S4011. In step S704, the printing workflow processing unit 112b determines an IPP attribute value based on the print settings stored in step S4011. Specifically, the IPP attribute corresponding to the print setting stored in step S4011 is set in the "IPP attribute value to be provided to printer" 809 in Figs. 8A and 8B.

In a case where the type of the IPP attribute value changing method is "Type 2", it is necessary to ensure that the processing on the print setting extension application side and the processing on the printer side do not overlap. In step S705, the printing workflow processing unit 112b determines to change to the IPP attribute value for restriction of image processing in the printer 104.

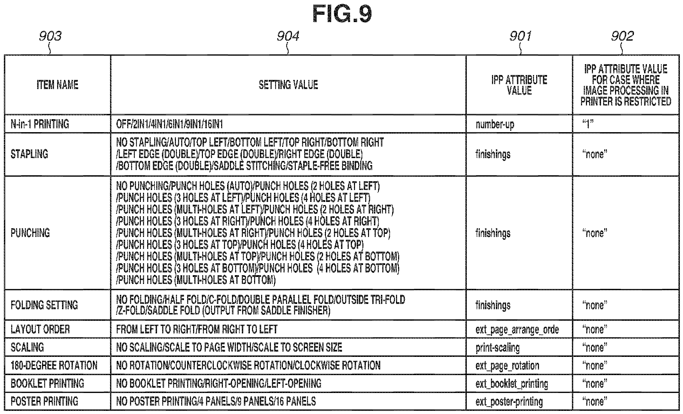

In step S705, the printing workflow processing unit 112b sets a value written in a column 902 of a table illustrated in Fig. 9 to the "IPP attribute value to be provided to printer" 809 in Figs. 8A and 8B. The table in Fig. 9 stores settings for ensuring that not the printer 104 but the print setting extension application 112 executes the processes corresponding to the setting items set to Type 2 in Figs. 8A and 8B. An "item name" 903 specifies an item name of each print setting item. A "setting value" 904 specifies print setting values that can be set for each setting item. An "IPP attribute" 901 specifies an IPP attribute for each print setting item and attribute information to be transmitted to the cloud printing service 121. The "IPP attribute value for a case where image processing in the printer is restricted" 902 specifies an IPP attribute value that is notified to the cloud printing service 121 and the printer 104 in a case where the print setting extension application 112 executes the process corresponding to the setting item.

In a case where the type of the IPP attribute value changing method is "Type 3", it is unnecessary to change the IPP attribute value. Thus, in step S706, the printing workflow processing unit 112b determines not to change the IPP attribute value. In step S706, the printing workflow processing unit 112b does not execute any processes, and the processing proceeds to step S707.

Next, in step S707, the information in the IPP attribute 808 and the "IPP attribute value to be provided to printer" 809 in the attribute value table are updated based on the results obtained through operations in steps S704 to S706.

In a case where there is an unchecked stetting item (YES in step S708), the printing workflow processing unit 112b repeats step S702 and subsequent steps.

For example, in the case of the attribute value table (Figs. 8A and 8B), "TRUE"

(811) is set to the preview editing flag 807 for the "N-in-1 printing" setting item. The type of the IPP attribute value changing method 806 is set to Type 2 indicating the classification of the changing method in which "the IPP attribute value is changed so that the process of the target function is restricted from being executed by the printer".

Thus, in step S705, it is determined to change to the IPP attribute value representing restriction of image processing in the printer 104.

In order to restrict image processing of N-in-1 printing in the printer 104, "1" indicating "1-in-1" is to be set to the IPP attribute "number-up".

Consequently, "1" (813) indicating "1-in-1" is set to the "IPP attribute value to be provided to printer" 809 with respect to "number-up" (812) in the IPP attribute 808 for the setting item "N-in-1 printing" as an update to the attribute value table.

The column 902 in Fig. 9 presents an example of the IPP attribute value for a case where image processing in the printer 104 is restricted.

The print setting extension application 112 stores the IPP attribute value for a case where image processing in the printer 104 is restricted as static information in advance in the program. The IPP attribute value is used and set to the "IPP attribute value to be provided to printer" 809 in the attribute value table (Figs. 8A and 8B) in a case where it becomes necessary to restrict image processing in the printer 104 in the function of Type 2.

As described above, according to the present embodiment, the printing workflow processing unit 112b of the print setting extension application 112 controls rotation during OS PDL conversion based on the capability of the printer 104 and restricts unnecessary page rotations in the printer 104 supporting the rotation capability. This makes it possible to obtain intended printing results.

A second embodiment of the present invention will be described. In the above-described example according to the first embodiment, in a case where the printer 104 does not have the page rotation capability, it is uniformly determined to "allow rotation" of images during OS PDL conversion, and image rotation is not restricted during OS PDL conversion.

However, there may be a case where a specific setting such as a finishing setting, e.g., punching or stapling, is effectively set for the printer 104 having no image rotation function.

In this case, rotating an image in the client terminal 101 may cause a discrepancy between the orientation of the image and the finishing position.

Thus, according to the second embodiment, in a case where the printer 104 does not support the image rotation capability but a print setting related to the finishing, such as stapling or punching, is set, printing is cancelled to prevent unintended outputs. An example will be described below.

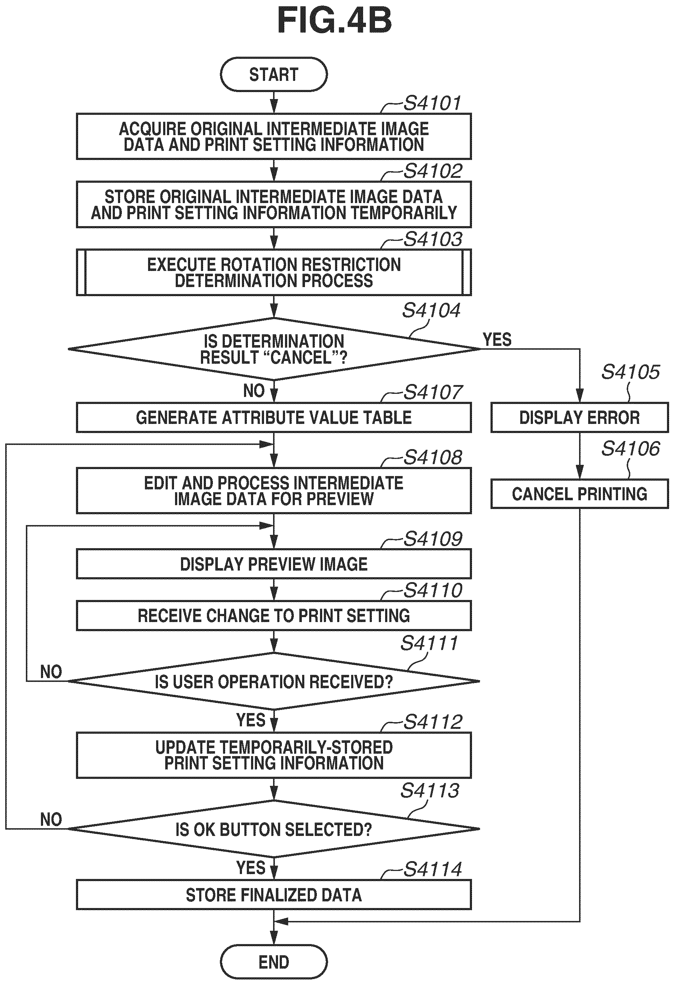

Specific processes according to the second embodiment will be described below with reference to Figs. 4B and 6B. Only differences from the first embodiment will be described below. System and hardware configurations are similar to those according to the first embodiment, with some exceptions, so that redundant descriptions thereof are omitted.

As a difference from the first embodiment, an example of a workflow process that the printing workflow processing unit 112b executes will be described below with reference to Figs. 4B and 6B. A main processing sequence according to the present embodiment is similar to that in Figs. 3A and 3B, so that redundant descriptions thereof are omitted.

A process illustrated in Fig. 4B is realized by the CPU 212 through execution of a program provided by the print setting extension application 112.

In a case where the printing workflow process (step S323) is started, initially, in step S4101, the printing workflow processing unit 112b executes a process of acquiring original intermediate image data and print setting information. The operations in steps S4101 and S4102 are similar to the operations in steps S4001 and S4002 according to the first embodiment, so that redundant descriptions thereof are omitted.

Next, in step S4103, the printing workflow processing unit 112b executes a rotation restriction determination process. Details of the rotation restriction determination process (step S4103) will be described below.

Next, in step S4104 after the rotation restriction determination process, in a case where a result of the determination indicates "cancel" (YES in step S4104), the processing proceeds to step S4105. In step S4105, the printing workflow processing unit 112b displays an error message (not illustrated) on the preview UI (Fig. 12). Thereafter, in step S4106, the printing workflow processing unit 112b cancels printing.

In a case where the determination result is other than "cancel" (NO in step S4104), the processing proceeds to step S4107. In step S4107, the attribute value table (Figs. 8A and 8B) is generated based on the setting item information stored in the program of the print setting extension application 112.

The operations from processing the intermediate image data for preview in step S4108 to a finalized data storing process in step S4114 are similar to those in steps S4005 to S4011 in Fig. 4A, so that redundant descriptions thereof are omitted.

Next, details of the rotation restriction determination process (step S4103) will be described below with reference to Fig. 6B.

A process illustrated in Fig. 6B is realized by the CPU 212 through execution of a program provided by the print setting extension application 112.

In step S611, the printing workflow processing unit 112b reads the device capability information stored in step S311 and determines whether the printer 104 supports the image rotation capability. The printing workflow processing unit 112b determines whether the rotation capability (ext-media-rotation-support) of the device capability information about the printer 104 is TRUE.

In a case where the printer 104 supports the image rotation capability (YES in step S611), the processing proceeds to step S612. In step S612, the printing workflow processing unit 112b determines to "`restrict rotation' during OS PDL conversion". In step S612, in a case where the "rotation capability (ext-media-rotation-supported)" in the capability information is "TRUE", the printing workflow processing unit 112b determines that rotation is allowed.

In a case where the printer 104 does not have the page rotation capability (NO in step S611), the processing proceeds to step S613. In step S613, the printing workflow processing unit 112b determines whether there is a specific print setting using the print setting information extracted from the Print Ticket and stored as temporarily-stored print setting information in the storage area.

Examples of specific print settings include stapling (including saddle stitching and staple-free binding), punching, folding setting, booklet printing, and N-in-1 printing. The order of the determination of the presence or absence of the rotation capability (step S611) and the determination of the presence or absence of the specific print settings (step S613) may be reversed from that according to the present embodiment.

In a case where the printing workflow processing unit 112b determines that there is a specific print setting as described above (YES in step S613), the processing proceeds to step S614. In step S614, the printing workflow processing unit 112b determines to "cancel" the print job due to an error.

In a case where the printing workflow processing unit 112b determines that there is no specific print setting described above (NO in step S613), the processing proceeds to step S615. In step S615, the printing workflow processing unit 112b determines to "'allow rotation' during OS PDL conversion".

In step S611 in Fig. 6B, whether the printer 104 supports the image rotation capability may be determined using the capability information in a different setting item described in Fig. 10. However, "finisher" in Fig. 10 is not included in the determination as to whether the image rotation capability is supported.

As described above, the present embodiment makes it possible to utilize the rotation function of the OS 114 even in a case where the printer 104 does not have the page rotation capability and, furthermore, makes it possible to prevent unintended printing results by cancelling only in the case of the specific print setting.

A third embodiment of the present invention will be described below. In the above-described example according to the first embodiment, in a case where the printer 104 does not have the page rotation capability, it is uniformly determined to "allow rotation" of images during OS PDL conversion, and image rotation is not restricted during OS PDL conversion.

In the above-described example according to the second embodiment, in a case where the printer 104 does not support the image rotation capability but there is a print setting related to a specific setting item, "cancellation" due to an error is performed to avoid unintended printing results.

According to the present embodiment, in a case where the printer 104 does not support the image rotation capability but there is a print setting related to the finishing, such as stapling or punching, the specific print setting is disabled to avoid unintended printing. An example will be described below.

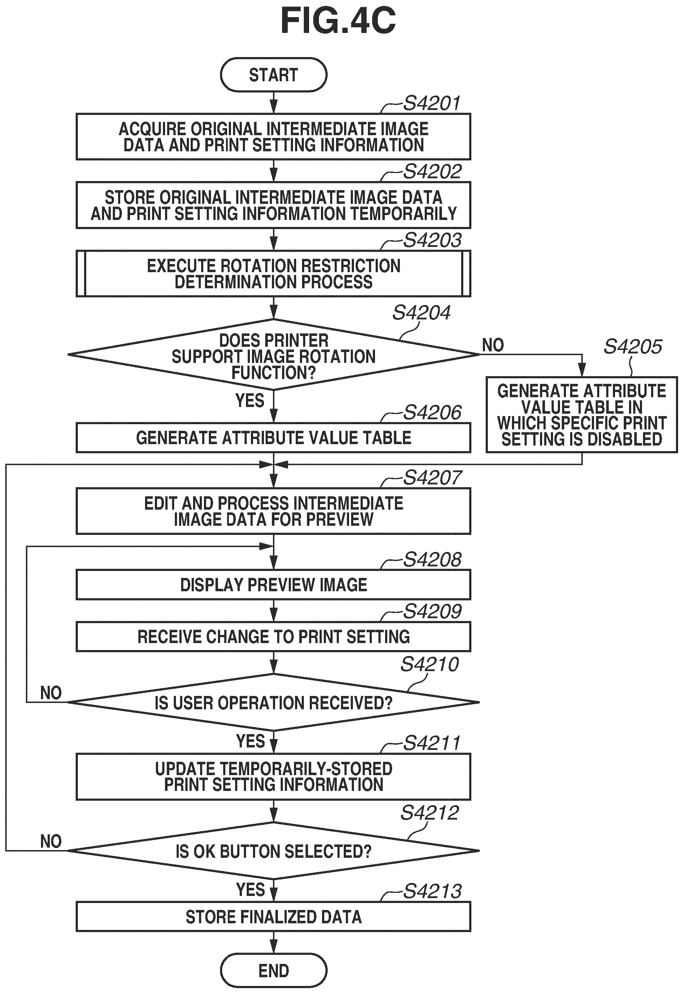

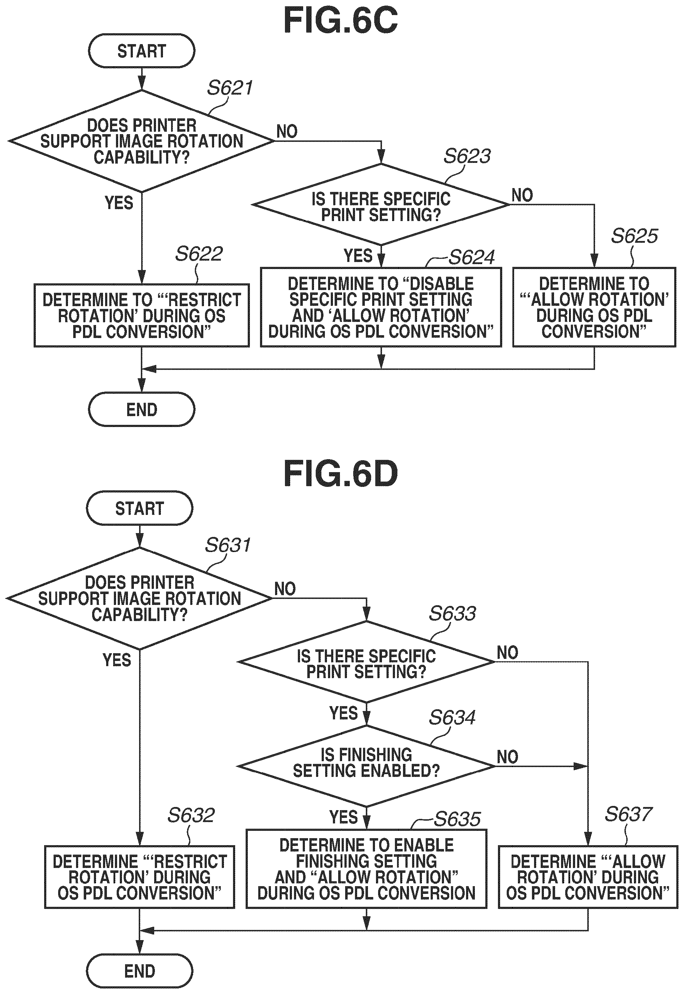

Specific processes according to the present embodiment will be described below with reference to Figs. 4C and 6C. Only differences from the first embodiment will be described below. System and hardware configurations are similar to those according to the first embodiment, with some exceptions, so that redundant descriptions thereof are omitted.

As a difference from the first embodiment, an example of a workflow process that the printing workflow processing unit 112b executes will be described below with reference to Figs. 4C and Fig. 6C.

A main processing sequence according to the present embodiment is similar to that in Figs. 3A and 3B, so that redundant descriptions thereof are omitted.

In a case where the printing workflow process (step S323) is started, the processing proceeds to step S4201. In step S4201, the printing workflow processing unit 112b executes a process of acquiring original intermediate image data and print setting information.

The operations in steps S4201 and S4202 are similar to those in steps S4001 and S4002 according to the first embodiment, so that redundant descriptions thereof are omitted.

Next, in step S4203, the printing workflow processing unit 112b executes a rotation restriction determination process. Details of the rotation restriction determination process (step S4203) will be described below.

In step S4204 after the rotation restriction determination process (step S4203), the printing workflow processing unit 112b determines whether the printer 104 supports the image rotation function.

In a case where the printer 104 supports the image rotation function (YES in step S4204), the processing proceeds to step S4206. In step S4206, the printing workflow processing unit 112b generates an attribute value table (Figs. 8A and 8B) based on the print setting item information stored in the program of the print setting extension application 112.

In a case where the printer 104 does not support the image rotation function (NO in step S4204), the processing proceeds to step S4205. In step S4205, the printing workflow processing unit 112b generates an attribute value table (Figs. 8A and 8B) in which the specific print setting item is disabled. Furthermore, the printing workflow processing unit 112b changes the print setting value stored temporarily in step S4202. For example, the printing workflow processing unit 112b disables the finishing and N-in-1 printing settings included in the temporarily-stored print settings.

An example of disabling specific print settings will be described below. The phrase "disabling print settings" here refers to disallowing of execution of the processes related to the functions on the printer 104 side. For example, in a case where the specific print settings are stapling, punching, and folding and processes related to the functions are to be executed on the printer 104 side, the printing workflow processing unit 112b sets, as IPP attribute values, "staple-top-left", "punch-dual-left", and "fold-half' to the IPP attribute "finishings" and instructs the printer 104.

Thus, in a case where the processes related to the functions are disallowed to be executed on the printer 104 side, the printing workflow processing unit 112b sets the setting value "none" to the IPP attribute value ("IPP attribute value to be provided to printer" 809 in Figs. 8A and 8B) for stapling and punching in the attribute value table (Figs. 8A and 8B). This "none" indicates that, in practice, the printer 104 is disallowed to execute the function and that the function is disabled.

For example, in a case where the specific print setting is the N-in-1 printing and the process of this function is to be executed on the printer 104 side, for example, "2" is set for the IPP attribute "number-up" and instructs the printer 104. This "2" indicates "2" of "2-in-1". In a case where the process of the function is disallowed to be executed on the printer 104 side, the printing workflow processing unit 112b sets the setting value "1" in the IPP attribute value ("IPP attribute value to be provided to printer" 809 in Figs. 8A and 8B) for the N-in-1 printing in the attribute value table (Figs. 8A and 8B). This "1" indicates "1" of "1-in-1", indicating that, in practice, the printer 104 does not execute N-in-1 printing and that the N-in-1 printing function is disabled.

In a case where the printing workflow processing unit 112b executes the operation in step S4205, a preview UI illustrated in Fig. 12B is displayed. Fig. 12B includes a notification 1204 indicating that the specific print settings have been disabled. The notification 1204 is displayed for a predetermined time and then hidden. According to the third embodiment, the preview UI is controlled so that the specific print settings cannot be changed. Examples of the control include graying out the display of the specific print settings and hiding objects for changing the setting values of the specific print settings.

This makes it possible to prevent the specific settings from being enabled on the preview UI.

The operation from editing and processing intermediate image data for preview display (step S4207) to a finalized data storing process (step S4213) are similar to those in steps S4005 to S4011 in Fig. 4A, so that redundant descriptions thereof are omitted.

Next, details of the rotation restriction determination process (step S4203) will be described below with reference to Fig. 6C.

In step S621, the printing workflow processing unit 112b reads the capability information stored in step S311 and determines whether the printer 104 supports the page rotation capability. This determination is similar to step S611.

In a case where the printer 104 supports the image rotation capability (YES in step S621), the processing proceeds to step S622. In step S622, the printing workflow processing unit 112b determines to "`restrict rotation' of images during OS PDL conversion".

In a case where the printer 104 does not support the image rotation capability (NO in step S621), the processing proceeds to step S623. In step S623, the printing workflow processing unit 112b determines whether there is a specific print setting using the print setting information extracted from the Print Ticket and stored as temporarily-stored print setting information in the storage area. Examples of specific print settings include stapling (including saddle stitching and staple-free binding), punching, folding setting, booklet printing, and N-in-1 printing.

In a case where there is a specific print setting in the temporarily-stored print settings (YES in step S623), the processing proceeds to step S624. In step S624, the printing workflow processing unit 112b determines to "disable the specific print setting and `allow rotation' of images during OS PDL conversion".

In a case where there is no specific print setting described above in the temporarily-stored print settings (NO in step S623), the processing proceeds to step S625. In step S625, the printing workflow processing unit 112b determines to "`allow rotation' of images during OS PDL conversion".

The order of the determination of the presence or absence of the rotation capability (step S621) and the determination of the presence or absence of the specific print settings (step S623) may be reversed from that according to the present embodiment.

As described above, the present embodiment makes it possible to utilize the rotation function of the OS 114 even in a case where the printer 104 does not support the rotation capability and, furthermore, makes it possible to continue printing to the fullest extent feasible and prevent unintended printing results by disabling the specific print settings.

A fourth embodiment of the present invention will be described. In the above-described example according to the third embodiment, in a case where the printer 104 does not support the image rotation capability and the set print settings include a specific print setting, the specific print setting is disabled.

According to the fourth embodiment, in a case where the printer 104 does not support the image rotation capability and the set print settings include specific print settings, certain specific print settings are switched from processing to be performed by the printer 104 to processing to be performed by the client terminal 101 while avoiding unintended printing. An example will be described below. According to the present embodiment, it is assumed that the printer 104 executes the processes for the setting items with Type 2 set in the IPP attribute value changing method 806 in Figs. 8A and 8B. According to the present embodiment, in a case where the printer 104 does not support the image rotation capability, a setting is changed so that not the printer 104 but the print setting extension application 112a executes the processes corresponding the setting items.

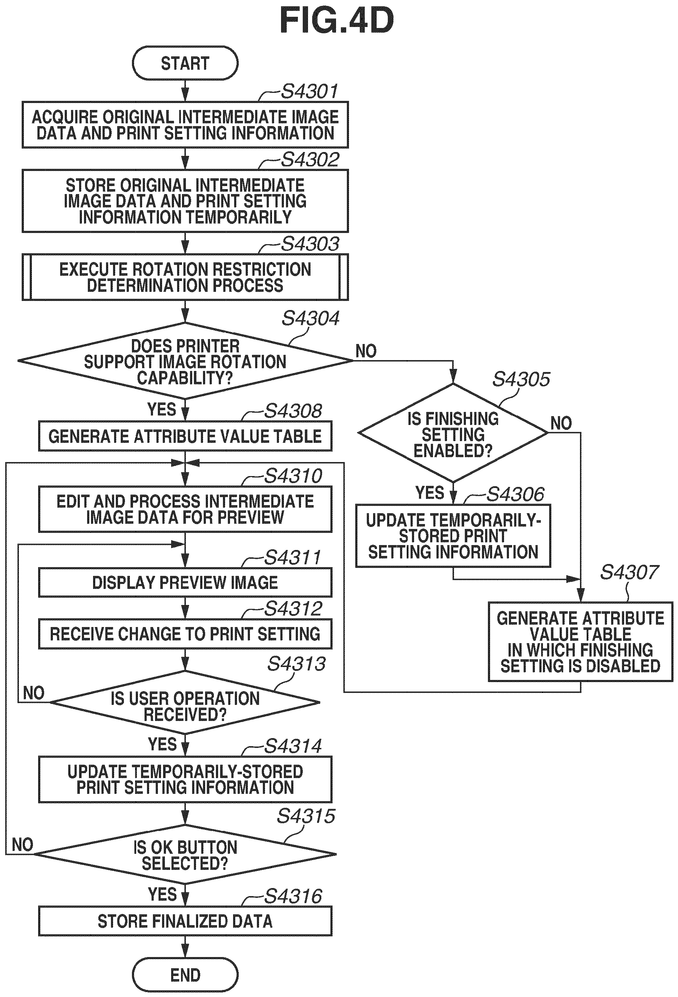

Specific processes according to the present embodiment will be described below with reference to Figs. 4D and 6D.

Only differences from the first and third embodiments will be described below. System and hardware configurations are similar to those according to the first embodiment, with some exceptions, so that redundant descriptions thereof are omitted.

As a difference from the first and third embodiments, an example of a workflow process that the printing workflow processing unit 112b executes will be described below with reference to Figs. 4D and Fig. 6D.

A main processing sequence according to the present embodiment is similar to that in Figs. 3A and 3B, so that redundant descriptions thereof are omitted.

In a case where the printing workflow process (step S323) is started, initially, in step S4301, the printing workflow processing unit 112b executes a process of acquiring original intermediate image data and print setting information.

The operations in steps S4301 and S4302 are similar to those in steps S4001 and S4002 according to the first embodiment, so that redundant descriptions thereof are omitted.

Next, in step S4303, the printing workflow processing unit 112b executes a rotation restriction determination process. Details of the rotation restriction determination process (step S4303) will be described below.

In step S4304 after the rotation restriction determination process (step S4303), the printing workflow processing unit 112b determines whether the printer 104 supports the image rotation capability.

A case where the printer 104 supports the image rotation capability (YES in step S4304) indicates that the print settings at the point before the preview are print settings that do not cause any issues with rotation during PDL conversion even in a case where the printer 104 executes the processes.

Specifically, specific print settings are print settings such as a color mode and stamping that do not involve physical control with a device, such as stapler, can be realized solely by editing intermediate image data, and do not cause any issues with rotation during PDL conversion in a case where the printer 104 executes the processes.

Such print settings do not cause any issues even in a case where the printer 104 executes the processes, so that in step S4308, the printing workflow processing unit 112b generates an attribute value table (Figs. 8A and 8B) based on the print setting item information stored in the program of the print setting extension application 112.

In a case where the printer 104 does not support the image rotation capability (NO in step S4304), the processing proceeds to step S4305. In step S4305, the printing workflow processing unit 112b determines whether the setting items related to the finishing are enabled in the temporarily-stored print settings.

In a case where the printing workflow processing unit 112b determines that the finishing is enabled in the temporarily-stored print settings (YES in step S4305), the processing proceeds to step S4306. In step S4306, the printing workflow processing unit 112b disables the corresponding print settings in the temporarily-stored print setting information stored in step S4302 and updates the temporarily-stored print settings.

In step S4307, the printing workflow processing unit 112b generates an attribute value table in which the preview display flag is set to TRUE and the IPP attribute value is set to none for each setting item related to the finishing. At this time, the entries currently set to Type 2 in the IPP attribute value changing method 806 in Figs. 8A and 8B are set to Type 3. Consequently, the print setting extension application 112 executes the items that can be processed by both the print setting extension application 112 and the printer 104. This makes it possible to execute image processing corresponding to each setting item prior to image rotation by the OS 114, thus preventing effects of image rotation by the OS 114.

According to the present embodiment, Type 3 is set for the setting items that can be processed by both the print setting extension application 112 and the printer 104 to perform control so that the print setting extension application 112 performs the process. Alternatively, Type 3 may be set for at least one of the setting items that belong to Type 2 in Figs. 8A and 8B and may be affected by image rotation. Specifically, the print settings, such as the color mode, the stamping, and the N-in-1 printing, that do not involve physical control with a device, such as a stapler, and can be realized solely by editing intermediate image data can be considered to correspond to the print settings that can be switched to processing by the client terminal 101. However, since the color mode and the stamping do not "cause issues with rotation during PDL conversion in a case where the processes are executed by the printer", the color mode and the stamping may be set to setting items that belong to Type 2 in generating the attribute value table in step S4307.

Consequently, the specific print settings are processed by the printing workflow processing unit 112b of the client terminal 101 instead of the printer 104 and are no longer executed by the printer 104.

The disabling of the specific print settings is executed by the same method as in the third embodiment, so that redundant descriptions thereof are omitted.

The operations in steps S4310 to S4316 are similar to those in steps S4005 to S4011 according to the first embodiment, so that redundant descriptions thereof are omitted.

Next, details of the rotation restriction determination process (step S4303) will be described below with reference to Fig. 6D.

In step S631, the printing workflow processing unit 112b reads the capability information stored in step S311 and determines whether the printer 104 supports the page rotation capability.

In a case where the printer 104 supports the page rotation capability (YES in step S631), the processing proceeds to step S632. In step S632, it is determined to "'restrict rotation' during OS PDL conversion".

In a case where the printer 104 does not have the page rotation capability (NO in step S631), the processing proceeds to step S633. In step S633, the printing workflow processing unit 112b determines whether there is a specific print setting using the print setting information extracted from the Print Ticket and stored as temporarily-stored print setting information in the storage area.

Examples of specific print settings include stapling (including saddle stitching and staple-free binding), punching, folding setting, booklet printing, and N-in-1 printing. The order of the determination of the presence or absence of the rotation capability (step S631) and the determination of the presence or absence of the specific print settings (S633) may be reversed from that according to the present embodiment.

In a case where the printing workflow processing unit 112b determines that there is no specific print setting (NO in step S633), the processing proceeds to step S637. In step S637, the printing workflow processing unit 112b determines to "'allow rotation' during OS PDL conversion".

In step S634, the printing workflow processing unit 112b determines whether the finishing setting is enabled in the temporarily-stored print settings.

In a case where the printing workflow processing unit 112b determines that the finishing setting is enabled in the temporarily-stored print settings (YES in step S634), the processing proceeds to step S635. In step S635, it is determined to enable the finishing setting in the temporarily-stored print settings and "allow rotation" during OS PDL conversion. The printing workflow processing unit 112b executes the determination in step S4305 in Fig. 4D based on the information stored in step S635.

In a case where the printing workflow processing unit 112b determines that the finishing is not enabled in the temporarily-stored print settings (NO in step S634), the processing proceeds to step S637.

As described above, the present embodiment makes it possible to print as closely as possible to the settings even in a case where the printer 104 does not have the page rotation capability, by switching the specific print settings to processing to be performed by the client terminal 101 while avoiding unintended printing.

### < Other Embodiments>

It is obvious that the present invention can also be realized by providing a recording medium containing program codes of software configured to realize the functions of the embodiments described above to a system or an apparatus and having a computer within the system or the apparatus read and execute the program codes.

In this case, the program codes read from the storage medium realize the functions of the embodiments described above, and the storage medium storing the program codes constitutes the present invention.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, or a memory card.

While the present invention has been described with reference to specific embodiments, it is to be understood that the invention is not limited to the specific disclosed embodiments.

## Claims

1. A control method for an information processing apparatus, the control method comprising:
acquiring capability information from a printer;
determining whether to allow image rotation through a function provided by an operating system of the information processing apparatus based on the capability information acquired from the printer; and
providing information based on the determination to the operating system.

2. The control method of claim 1, further comprising, in a case where a process related to the image rotation is performable by the printer based on image data received from the information processing apparatus, determining that the image rotation through the function provided by the operating system is not allowed.

3. The control method of claim 1, further comprising, in a case where the capability information indicating that a process related to the image rotation is performable by the information processing apparatus is acquired in the acquiring, determining that the image rotation through the function provided by the operating system is not allowed.

4. The control method of claim 1 wherein the determining whether to allow the image rotation through the function provided by the operating system is based on the capability information and a setting value set via a print setting screen.

5. The control method of claim 4, further comprising, in a case where the capability information does not include a capability for the printer to rotate an image of image data received from the information processing apparatus and the setting value does not include a setting value for causing the printer to execute a post-process, determining that the image rotation through the function provided by the operating system is allowed.

6. The control method of claim 5, further comprising performing control so that a process related to printing in the information processing apparatus is cancelled in a case where the capability information does not include the capability for the printer to rotate the image of the image data received from the information processing apparatus and the setting value does not include the setting value for causing the printer to execute the post-process.

7. The control method of claim 6, further comprising setting, in a case where the capability information does not include the capability for the printer to rotate the image of the image data received from the information processing apparatus and the setting value does not include the setting value for causing the printer to execute the post-process, the setting value for causing the printer to execute the post-process to disabled.

8. An information processing apparatus comprising:
acquisition means for acquiring capability information from a printer;
determination means for determining whether to allow image rotation through a function provided by an operating system of the information processing apparatus based on the capability information acquired from the printer; and
provision means for providing information based on the determination by the determination means to the operating system.

9. The information processing apparatus of claim 8, further comprising means for performing the control method according to any one of claims 2 to 7.

10. A computer program comprising instructions which, when executed by a computer of an information processing apparatus, causes the computer of the information processing apparatus to perform the control method according to any one of claims 1 to 7.
